(19) Europäisches Patentamt
European Patent Office
Office européen des brevets

(11) **EP 2 535 389 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(51) Int Cl.:
***C09J 7/40*** (2018.01)   ***C09D 183/04*** (2006.01)

(21) Anmeldenummer: **12170649.3**

(22) Anmeldetag: **04.06.2012**

(54) **Trennbeschichtung mit einem niedrigen Reibungskoeffizienten**

Release coating with a low friction coefficient

Couche de séparation avec coefficient de friction réduit

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2011 DE 102011077700**

(43) Veröffentlichungstag der Anmeldung:
**19.12.2012 Patentblatt 2012/51**

(73) Patentinhaber: **tesa SE**
**22848 Norderstedt (DE)**

(72) Erfinder:
• **Zeysing, Björn, Dr.**
**22393 Hamburg (DE)**
• **Herrmann, Alexander**
**22529 Hamburg (DE)**
• **Wieck, Andreas**
**25469 Halstenbek (DE)**
• **Böcker, Patrick, Dr.**
**22397 Hamburg (DE)**

(56) Entgegenhaltungen:
**EP-A2- 0 523 527    US-A1- 2005 003 216**

• **Anonymus: "Cosmetic Ingredients Global Portfolio", , 11 April 2013 (2013-04-11), pages 1-12, XP055378268, Retrieved from the Internet: URL:http://www.cromaroma.com.co/admin/_lib /file/doccatalogos_representaciones/Brochu re Cosmetic Ingredients.pdf [retrieved on 2017-06-02]**

**Beschreibung**

Die Erfindung betrifft eine Zusammensetzung für Trennbeschichtungen, die einen niedrigen Reibungskoeffizienten haben.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als derartige Massen, die auch Releasematerial genannt werden, können eine Vielzahl verschiedener Stoffe eingesetzt werden: Wachse, fluorierte oder teilfluorierte Verbindungen und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt.

Eine Reihe von beidseitig mit Klebmasse beschichteten Klebebändern werden abgerollt und noch mit dem im Produkt enthaltenen Releaseliner, der die zweite Klebmasse abdeckt, appliziert. Bei der manuellen Applikation wird die Klebmasse des Klebebandes durch Überstreichen des Releaseliners mit der Hand mit dem Untergrund in Kontakt gebracht. Bei diesem unter Andruck durchgeführten Anstreichen findet ein starker Kontakt zwischen Releaseliner des Produktes und der Hand statt. Die überwiegend eingesetzten Releaseliner haben bedingt durch das eingesetzte Trennmaterial eine stumpfe Oberfläche mit hohem Reibungskoeffizient. In diesem Fall ist das Anstreichen des Produktes unangenehm bis schmerzhaft - besonders wenn dies häufig und/oder mit hoher Geschwindigkeit durchgeführt wird.

Es ist bekannt, dass der Reibungskoeffizient von Silikon-Trennbeschichtungen durch verschiedene Methoden verringert werden kann, die jedoch alle gewisse Nachteile aufweisen.

Unmodifizierte Silikonsysteme, wie sie durch Vernetzung von funktionalisierten Siloxanen gebildet werden, weisen sehr gute Trenneigenschaften, aber einen hohen Reibungskoeffizienten auf. Bei der Verwendung von Silikon-Kondensationssystemen anstelle von den industriell überwiegend eingesetzten Silikon-Additionssystemen ist der Reibungskoeffizient etwas niedriger. Allerdings verwenden die Kondensationssysteme nahezu ausschließlich toxische Zinnkatalysatoren.

Dem Fachmann ist bekannt, dass durch Reduktion der Schichtdicke des Trennsystems die Reibung erniedrigt werden kann. Allerdings führt dies gleichzeitig zu einer oft unerwünschten Verschlechterung der Trenneigenschaften. Der Reibungskoeffizient von Trennsystemen kann auch durch Zusatz von Ölen oder Stoffen, die die bei Vernetzung des Trennsystems gebildeten Strukturen aufweiten, erniedrigt werden. Dies führt jedoch dazu, dass der Anteil der migrationsfähigen Stoffe im Trennsystem ansteigt. Diese können durch Ablagerung auf einer im Kontakt mit dem Trennsystem stehenden Klebmasse die Klebkraft von dieser erniedrigen.

Die EP 0 903 385 B1 beschreibt die Reduktion der Reibung von strahlungsvernetzenden Silikonsystemen durch Zusatz von sphärischen Silikonpartikeln, die durch kontrollierte Hydrolyse von Methyltrimethoxysilan hergestellt werden. Der aufwändige und unflexible Herstellungsprozess verhindert den in einem Aspekt der dortigen Erfindung besonders vorteilhaften Einsatz von porösen oder hohlen Additiven.

Die US 7,198,854 B beschreibt Silikon-Formulierungen zur Behandlung von textilen Materialien, um die Reibung zu verringern und ein glänzendes Erscheinungsbild zu erzeugen. Dieser Effekt wird durch den Zusatz einer Mischung aus Nylon und Silica-Partikeln erzeugt. Der Einsatz von Silica-Partikeln führt zu einer im Klebebandbereich unerwünschten Erhöhung von Trennkräften.

US 5,620,775 A beschreibt Gegenstände, deren Beschichtung 20 bis 180 μm durchmessende Glaskugeln enthält, um die Reflektivität und Reibung zu verbessern und um eine hydrophile Oberfläche zu erzeugen. Während 20 μm durchmessende Kugeln für die Anwendung in Trennfolien und -papieren deutlich zu groß sind, würde die Erzeugung von hydrophilen Oberflächen zu einer deutlichen Verschlechterung des Trennverhaltens von Klebmassen führen.

US 2005/0003216 A1 hat eine Silikon-Trennbeschichtung zum Gegenstand, die eine Mischung aus einem strahlungs- oder wärmehärtbaren Organopolysiloxan, einer katalytisch effektiven Menge mindestens eines Initiators und polymeren Mikropartikeln umfasst. Die Trennbeschichtung weist verbesserte Gleit-/Scher-, Antiblock-, Transfer-Eigenschaften bei verringerten Trennwerten auf.

EP 0 523 527 A2 beschreibt ein härtbares, Silikon-basiertes Trennmittel, das 100 Gewichtsteile eines Organopolysiloxans, and 0,1 bis 1.000 Gewichtsteile feiner Harzpartikel umfasst, welche in organischem Lösemittel quellbar oder löslich sind. Das Trennmittel soll einen ausgehärteten Film bilden, der Öl-basierende Tinte absorbieren kann.

Aufgabe der vorliegenden Erfindung ist die Herstellung von Trennschichten, die einen niedrigen Reibungskoeffizienten mit stabilen, niedrigen Trennwerten kombinieren und die für die Anwendung im Klebeband-Bereich keine Reduktion der Klebkraft durch Übertrag einiger Komponenten der Trennbeschichtung auf die Klebmasse nach Kontakt zeigen. Die erfindungsgemäß hergestellten Trennschichten sollen toxikologisch unbedenklich und prozesstechnisch gut handhabbar sein. Allgemein soll die vorliegende Erfindung die Nachteile des Standes der Technik überwinden.

Gelöst wird diese Aufgabe durch eine Zusammensetzung einer Trennbeschichtung, wie sie im Hauptanspruch niedergelegt ist. Gegenstand der Unteransprüche sind vorteilhafte Fortbildungen des Erfindungsgegenstandes. Des Weiteren umfasst die Erfindung die Verwendung dieser Zusammensetzung.

Demgemäß betrifft die Erfindung eine Zusammensetzung einer Trennbeschichtung insbesondere zur Ausrüstung eines Releaseliners mit einer Schicht aus der Trennbeschichtung enthaltend:

- ein Trennmittel und
- 0,1 bis 5 Gew.-%, weiter bevorzugt 0,3 bis 5 Gew.-% (jeweils bezogen auf die Gesamtzusammensetzung) eines feinteiligen Additivs in Form von Kugeln, dadurch gekennzeichnet, dass die Kugeln aus PMMA (Polymethylmethacrylat) oder Mischungen aus PMMA bestehen.

Gemäß einer ersten vorteilhaften Ausführungsform der Erfindung besteht die Trennbeschichtung nur aus dem Trennmittel und dem Additiv.

Gemäß einer weiteren vorteilhaften Ausführungsform der Erfindung beträgt die Länge des Durchmessers der Kugeln 0,01 $\mu$m bis 10 $\mu$m, bevorzugt 0,1 $\mu$m bis 8 $\mu$m und besonders bevorzugt 1 $\mu$m bis 4 $\mu$m.

Als Hauptdurchmesser des Körpers gilt der Durchmesser mit der größten Länge.

Als Nebendurchmesser des Körpers gilt der Durchmesser mit der kleinsten Länge.

Bei einer idealen Kugel sind die Längen von Hauptdurchmesser und Nebendurchmessers identisch.

Üblicherweise sind die Kugeln aus Vollmaterial. Vorteilhaft sind die Kugeln aber hohl und/oder porös.

In einem speziellen Aspekt der Erfindung ist der Einsatz von porösen Kugeln vorteilhaft, da dieser eine Beschriftbarkeit oder Bedruckbarkeit eines mit der Trennbeschichtung beschichteten Trägers ermöglicht. Weiterhin führt der Einsatz von porösen oder Hohlkugeln zu Schichten mit besonders angenehmem Hautgefühl, also einem besonders niedrigen Reibungskoeffizienten.

Eine ganz besonders vorteilhafte Ausführungsform der Erfindung umfasst als Additiv Kugeln aus PMMA mit einem Hauptdurchmesser von 1 $\mu$m bis 4 $\mu$m. Der Nebendurchmesser der Kugeln weicht, wenn eine ideale Kugelform nicht gegeben ist, um maximal 5 % vom Hauptdurchmesser des Körpers ab.

Als Trennmittel können alle dem Fachmann bekannten Systeme verwendet werden.

Bevorzugt ist das Trennmittel gewählt aus der Gruppe Silikon, fluoriertes Silikon, Silikon-Copolymere, Wachse, Carbamate oder Mischungen aus zwei oder mehr der genannten Stoffe.

Das Trennmittel kann lösungsmittelhaltige und/oder lösungsmittelfreie Systeme umfassen, bevorzugt werden lösungsmittelfreie Systeme.

Das Trennmittel kann strahlungsvernetzend (UV- oder Elektronenstrahl-), kondensations- oder additionsvernetzend sein, bevorzugt ist es additionsvernetzend.

Als Trennmittel werden bevorzugt vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Silikonbasierende Trennmittel auf additionsvernetzender Basis lassen sich durch Hydrosilylierung härten. Diese Trennmittel umfassen üblicherweise die folgenden Bestandteile:

- ein alkenyliertes Polydiorganosiloxan (insbesondere lineare Polymere mit endständigen Alkenylgruppen),
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungskatalysatoren) haben sich beispielsweise Platin oder Platinverbindungen, wie zum Beispiel der Karstedt-Katalysator (eine Pt(0)-Komplexverbindung) durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierten Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliciumatomen gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Des Weiteren können fluorierte Silikone und/oder Silikon-Copolymere Verwendung finden.

Gemäß einer besonders vorteilhaften Ausführungsform der Erfindung weist die Trennbeschichtung die folgende Zusammensetzung auf:

- Als Trennmittel wird ein additionsvernetzendes Silikonsystem bestehend aus einem vinylfunktionalisiertem Polysiloxan als Basispolymer, einem Methylhydrogensiloxan als Vernetzer, sowie einem Platinkatalysator eingesetzt, und zwar zu einem Anteil von 92,5 bis 99,5 Gew.-%.

- Zu diesem Trennmittel werden als Additiv Kugeln aus PMMA mit einem Hauptdurchmesser von 1 $\mu$m bis 4 $\mu$m zugegeben, und zwar zu einem Anteil von 0,5 bis 5 Gew.-%. Auch hier weicht der Nebendurchmesser der Kugeln, wenn eine ideale Kugelform nicht gegeben ist, um maximal 5 % vom Hauptdurchmesser des Körpers ab. Die Mischung wird vollständig homogenisiert.

Gegenstand der Erfindung ist weiterhin die Verwendung von entsprechenden Trennbeschichtungen als zumindest eine Schicht auf einem Releaseliner, insbesondere in Form zumindest einer Schicht auf einem Träger, so dass ein Releaseliner entsteht, welcher in direktem Kontakt zu einer (Haft)-Klebemasse eingesetzt werden kann. Hierzu wird die Beschichtung bevorzugt als geschlossene Schicht auf einen Releaseliner aufgetragen. Vorzugsweise ist der Releaseliner beidseitig mit der Trennbeschichtung ausgerüstet.

Die Silikone werden - lösungsmittelfrei oder aus Lösung - auf den Träger aufgebracht, wobei alle dem Fachmann geläufigen Beschichtungsverfahren verwendet werden können, dort erforderlichenfalls getrocknet (das Lösemittel abgezogen) und bilden anschließend eine bevorzugt geschlossene Silikonbeschichtung.

Bevorzugt wird die Trennbeschichtung als zumindest eine Schicht auf einem Releaseliner mit einer Schichtdicke von 0,1 bis 5,0 $\mu$m, weiter vorzugsweise von 0,2 bis 2,5 $\mu$m, besonders bevorzugt von 0,4 bis 2,0 $\mu$m verwendet.

Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien.

Schließlich betrifft die Erfindung die Verwendung der erfindungsgemäßen Trennbeschichtung - vorzugsweise auf Silikonbasis - als zumindest eine Schicht auf einem Releaseliner, mit dem ein ein- oder beidseitig klebendes Klebeband ein- oder beidseitig eingedeckt ist. Üblicherweise wird ein einseitiges Klebeband auf der Klebemassenseite mit einem Releaseliner eingedeckt. Bei einem zweiseitigen Klebeband kann ein Releaseliner ausreichen, es können aber auch beide Klebemassenseiten mit jeweils einem Releaseliner ausgerüstet sein.

Als Klebemasse ist in dem Klebeband eine Haftklebemasse vorhanden, so dass sich ein einseitig klebendes Klebeband ergibt, in dem die Beschichtung als Trennmittel wirkt.

Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage.

Als Beispiele für Haftklebemassen, aber ohne eine Einschränkung vornehmen zu wollen, seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Der Träger oder Liner des Klebebands wird einseitig mit dem bevorzugten Haftkleber aus Lösung oder Dispersion oder 100 %ig (zum Beispiel Schmelze) oder durch Coextrusion beschichtet. Alternativ ist eine Beschichtung durch Transfer einer Klebemassen-Schicht durch Kaschieren möglich. Die Klebeschicht(en) können durch Wärme oder energiereiche Strahlen vernetzt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Klebstoffschicht beträgt bevorzugt 10 bis 120 g/m$^2$, vorzugsweise 25 bis 100 g/m$^2$ (gemeint ist die Menge nach einer eventuell notwendigen Entfernung von Wasser oder Lösungsmittel; die Zahlenwerte entsprechen auch in etwa der Dicke in $\mu$m).

Vorteilhaft ist eine physikalische Vorbehandlung der mit Haftklebemasse zu beschichtenden Trägerseite zur Verbesserung der Haftung, beispielsweise durch Flamm-, Plasma- oder Coronabehandlung.

Bei Bedarf kann vor dem Aufbringen der Haftkleberschicht auf dem Träger eine Primerschicht, insbesondere lösungsmittelfrei wie zum Beispiel durch Coextrusion, aufgebracht werden, so dass sich zwischen der Trägerschicht und einer Haftkleberschicht eine Primerschicht befindet.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis.

Beschreibungen der üblichen Primer finden sich zum Beispiel in "Handbook of Pressure Sensitive Adhesive Technology", D. Satas, (3. Auflage).

Besonders vorteilhaft findet der Releaseliner in einem Klebeband Verwendung, das zum Verbinden von Papier- oder Folienbahnen eingesetzt wird.

Flache, bahnförmige Materialien, insbesondere Papier, werden zu Ballen gewickelt. Solche Ballen werden zum Beispiel papierverarbeitenden Maschinen oder Druckbeziehungsweise Verpackungsmaschinen zugeführt. Beim Dauerbetrieb solcher Anlagen ist es notwendig, an das Ende eines ersten Ballens des flachen, bahnförmigen Materials im fliegenden Wechsel den Beginn eines neuen aufgewickelten Ballens anzusetzen und in geeigneter Weise zu verbinden, ohne beim Wechsel der Rollen die schnelllaufenden Maschinen anhalten zu müssen. Dieser Vorgang wird als Spleißen (engl. "splice") bezeichnet.

Hierfür werden in der Papierindustrie doppelseitig klebende Selbstklebebänder eingesetzt, die im Wesentlichen aus einer Trägerschicht und zwei Selbstklebemasseschichten bestehen, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

Durch die erfindungsgemäßen Additive ergibt sich eine Zusammensetzung einer Trennbeschichtung, das auf einem Träger einen signifikant niedrigeren Reibungskoeffizient aufweist als das gleiche System ohne die erfindungsgemäßen Additive.

Diese Additive reduzieren die Reibung von Trennschichten unter Beibehaltung der guten Trenneigenschaften gegen verschiedene Klebmassen.

**Beispiele**

Die Erfindung soll im Folgenden durch Beispiele erläutert werden, ohne sie dadurch einzuschränken. Solange es nicht anders angegeben wird, sind alle Anteile von Komponenten jeweils auf ihr Gewicht bezogen angegeben.

### Herstellung und Beschichtung der Trennsysteme

Es wurden Releaseliner auf einem Glassine-Papier (Silca ind. 2S white SCO 90 g der Firma Ahlström) hergestellt, indem die unten angegebenen Trennsystem-Formulierungen mit und ohne Zusätze von Additiven über eine Labor-Beschichtungsanlage aufgebracht wurden. Das Beschichtungsgewicht lag bei 1,5 g/cm$^2$, was einer ca. 1,5 $\mu$m dicken Schicht entspricht. Nach der Beschichtung wurden die Trennsysteme im Umluftofen 30 s lang bei 160 °C vernetzt. Die auf diese Art hergestellten Liner wurden im Hinblick auf ihren Reibungskoeffizienten, den Trennwert der Testbänder tesa® 7475 und tesa® 7476 sowie dem Masseauftrag und der Klebkraft-Depression untersucht. Bei dem Testband tesa® 7475 handelt es sich um ein 40 $\mu$m dicken PVC-Träger, der mit 95 g/m$^2$ einer Harz modifizierten Acrylat-Haftklebmasse beschichtet ist. Das Testband tesa® 7476 verwendet einen Masseauftrag von 130 g/m$^2$ einer Naturkautschuk-Haftklebmasse auf einem 160 g/m$^2$ dicken Träger.

### Messung des Trennverhaltens

Die oben beschriebenen Releaseliner wurden mit zwei unterschiedlichen Klebebändern beklebt. Dazu wurden jeweils 20 mm breite und 300 mm lange Streifen von den Testbändern tesa® 7475 und tesa® 7476 auf die Releaseliner geklebt. Pro Probe wurden jeweils 3 Laminate aus Liner mit Testband tesa® 7475 und Liner mit Testband tesa® 7476 unter Druck und Temperatur 24 h lang gelagert. Die Temperatur bei der Lagerung betrug 40 °C für das Testband tesa® 7476 und 70 °C für das Testband tesa® 7475. Der Druck betrug in beiden Fällen 4 N/cm$^2$. Nach der anschließenden Lagerung der Proben für 2 Stunden in einem klimatisierten Messraum bei 23 °C und 50 % relative Luftfeuchtigkeit wurde das Trennverhalten mit Hilfe einer Zugprüfung bestimmt.

### Messung der Klebkraft-Depression

Weiterhin wurde ein möglicher Übertrag von Silikon oder den verschiedenen Additiven durch Messung der Klebkraft-Depression des Testbandes tesa® 7475 evaluiert. Dazu wurde die Klebkraft eines neuen Testbandes tesa® 7475 auf einer Stahloberfläche durch eine Zugprüfung gemessen.

Anschließend wurde ein Testband tesa® 7475, welches vorher zur Messung des Trennverhaltens für 24 h bei Druck und Temperatur mit dem Liner gelagert wurde ebenfalls auf Stahl geklebt und die Klebkraft mit einer Zugprüfung gemessen. Die Klebkraft-Depression wird nach folgender Formel berechnet:

$$Klebkraft - Depression = \frac{(Klebkraft\ frisches\ Tape\ -\ Klebkraft\ Tape\ in\ Kontakt\ mit\ Liner)}{Klebkraft\ frisches\ Tape} * 100\%$$

### Messung des Silikonauftrags

Bei silikonbasierten Trennsystemen wurde der Auftrag des Trennsystems über Röntgenfluoreszenzanalyse bestimmt. Dazu wird der mit dem zu untersuchenden Trennsystem beschichtete Träger mit dem Röntgenfluoreszenz-Analysator Lab-X$^{3000}$ der Firma Oxford mit interner (Polydimethylsiloxan-) Referenz analysiert. Da die Schichtdicke der Trennschicht bei dieser Methode über die Signalstärke des Siliciums bestimmt wird, ist zu beachten, dass bei dieser Methode einige der verwendeten Additive einen Beitrag zur gemessenen Schichtdicke beitragen und andere nicht - je nachdem ob die Additive selbst Silicium enthalten, oder nicht.

### Bestimmung des Reibungskoeffizienten

Zur Bestimmung des Reibungskoeffizienten beziehungsweise der dahinter stehenden Frage, ob das Trennsystem ein angenehmes Hautgefühl beim Anstreichen zeigt, wurden die mit Trennsystem beschichteten Proben im direkten Vergleich von fünf Testpersonen bewertet. Die Bewertungsgrundlage ist das Hautgefühl bei Anstreichen des mit Trennsystem beschichteten Liners mit der Hand unter stärkerem Druck - also den üblichen, dem Fachmann bekannten Methoden zur Applikation von Haftklebstoffen. Die Bewertungsskala geht von 1 bis 10, wobei eine höhere Punktzahl ein angenehmeres Hautgefühl bedeutet. Jede Testperson soll die Probe mit dem angenehmsten Hautgefühl mit 10 und die mit dem unangenehmsten Hautgefühl mit 1 bewerten. Alle weiteren Proben werden relativ zu diesen nach dem jeweiligen Hautgefühl bewertet. Zur Auswertung wurde der Mittelwert der Bewertungen der verschiedenen Testpersonen berechnet.

**Beurteilung der Beschriftbarkeit von Trennsystemen**

Zur Beurteilung der Beschriftbarkeit von Trennmaterialien wird auf diesen mit einem Textmarker (Edding 3000 ROT, Permanent Marker) geschrieben. Nach 10 s Trocknungszeit wird mit leichtem Andruck mit Zellstoff über die Schrift gewischt. Je nachdem wie stark die Schrift auf dem Trennsystem verläuft oder abgewischt wird, wird eine Note von 1 bis 10 verteilt, wobei 1 ein vollständiges Entfernen und 10 gar kein Verlaufen der Schrift auf dem Trennsystem bedeutet.

**Beispiel 1**

**Silikonsystem ohne Additive / mit Additiven**

Beim Silikonsystem A handelt es sich um ein additionsvernetzendes Silikonsystem der Firma Wacker. 9,75 g DEH 915 (ein mit Vinylgruppen funktionalisiertes Polydimethylsiloxan) wurden mit 0,33 g V24 (ein Methylhydrogenpolysiloxan) und 0,08 g Kat OL (ein Platinkatalysator, auch unter dem Namen "Karstedt-Katalysator" bekannt) gemischt.

Silikonsystem B ist ein additionsvernetzendes Silikonsystem der Firma Momentive. Es wurden 9,75 g SL 6961 (ein mit Vinylgruppen funktionalisiertes Polydimethylsiloxan) mit 0,33 g SL 4330 (ein Methylhydrogenpolysiloxan) und 0,8 g SL 6210 (ein Platinkatalysator, auch unter dem Namen "Karstedt-Katalysator" bekannt) gemischt.

Zu dem Silikonsystem A wurden unterschiedliche Anteile an PMMA-Kugeln (Covabead LH 70/3 der Firma Sensient, sphärische PMMA-Kugeln mit einem Partikeldurchmesser (Hauptdurchmesser) von 3 $\mu$m) gegeben und die Mischung wurde homogenisiert. Alle Silikon-Formulierungen wurden mit einer Laborstreichmaschine mit einem Silikonauftrag von 1,5 g/m$^2$ auf ein Glassine Papier (Silca ind. 2S white SCO 90 g der Firma Ahlström) beschichtet. Die beschichteten Proben wurden 30 s im Ofen bei 160 °C vernetzt. Anschließend wurden die Trennwerte mit den Testbändern, sowie Klebkraft-Depression und Reibungsverhalten der Muster wie oben beschrieben bewertet.

Die Ergebnisse sind in Tabelle 1 zusammengefasst.

**Tabelle 1: Auswirkung von erfindungsgemäßen Additiven auf Trennwerte und Reibungsverhalten von Release Linern**

| Silikonsystem | Additiv | rub-off | TW 7475 [cN/cm] | TW 7476 [cN/cm] | Klebkraft-Depression [%] | Reibungsverhalten |
|---|---|---|---|---|---|---|
| A | kein | 1 | 8 | 14 | -1% | 2 |
| B | kein | 2 | 9 | 9 | 4% | 2 |
| A | 0,5 Gew % PMMA (Covabead LH 70-3) | 2 | 7 | 12 | -3% | 3 |
| A | 1,0 Gew.% PMMA (Covabead LH 70-3) | 2 | 8 | 13 | 0% | 6 |
| A | 2,5 Gew.% PMMA (Covabead LH 70-3) | 2 | 8 | 11 | 0% | 8 |
| A | 5,0 Gew.% PMMA (Covabead LH 70-3) | 2 | 6 | 10 | 2% | 8 |
| A | 7,5 Gew.% PMMA (Covabead LH 70-3) | 1 | 5 | 10 | 2% | 10 |

Das Beispiel mit 7,5 Gew.-% PMMA ist ein nicht erfindungsgemäßes Vergleichsbeispiel. Die in Tabelle 1 dargestellten Werte zeigen eindeutig, dass die erfindungsgemäßen Additive das Trennverhalten - ausgedrückt durch die Trennwerte tesa® 7475, tesa® 7476 und die Klebkraft-Depression - nicht verändern. Gleichzeitig verbessern die Additive das Reibungsverhalten der Liner signifikant. Ein zunehmender Anteil an PMMA-Additiv führt in dem untersuchten Bereich zu einem verbesserten Reibungsverhalten.

**Vergleichsbeispiel 2**

**Silikonsystem mit nicht-erfindungsgemäßen Additiven**

Silikonsystem A ist wie in Beispiel 1 gewählt und die Formulierungen wurden wie in Beispiel 1 beschrieben verarbeitet, beschichtet und vernetzt.

CFA100 ist ein hochmolekulares Organopolysiloxan mit einem sehr niedrigen Anteil an funktionellen Gruppen, das von der Wacker Chemie AG hergestellt wird.

**Tabelle 2: Silikonsystem mit nicht-erfindungsgemäßen Additiven**

| Silikonsystem | Additiv | rub-off | TW 7475 (cN/cm) | TW 7476 [cN/cm] | Klebkraft Depression [%] | Beschritt barkeit | Reibungsverhalten |
|:---:|:---:|:---:|:---:|:---:|:---:|:---:|:---:|
| A | kein | 1 | 8 | 14 | -1% | 1 | 2 |
| A | 20 Gew % CFA100 | 2 | 7 | 13 | 9% | 2 | 2 |

In dem untersuchten Silikonsystem konnte durch Zusatz von CFA100 keine signifikante Verbesserung des Reibungsverhaltens festgestellt werden. Die Trennkräfte mit beiden Testbändern tesa® 7475 und tesa® 7476 blieben konstant - allerdings stieg die Klebkraft-Depression an. Rub-off und Beschriftbarkeit zeigen nur geringfügige Unterschiede.

**Vergleichsbeispiel 3**

**Silikonsystem mit nicht-erfindungsgemäßen Additiven**

Silikonsystem A ist wie in Beispiel 1 gewählt.

Als Zusätze wurden verschiedene Silica-Partikel als Voll- und Hohlkörper zu dem Silikonsystem gegeben und die Formulierungen wurden wie in Beispiel 1 beschrieben verarbeitet und auf Glassine beschichtet und vernetzt. MSS-500/3 sind sphärische Silica-Partikel von der Firma Kobo mit einem Durchmesser (Hauptdurchmesser) von 3 $\mu$m. MSS-500/3H sind Oberflächen-modifizierte, sphärische Silica-Partikel der Firma Kobo mit 3 $\mu$m Durchmesser (Hauptdurchmesser). Silica Shells sind elliptische Silica-Hohlkugeln der Firma Kobo mit einem Durchmesser von 3 $\mu$m (Hauptdurchmesser), wobei der Nebendurchmesser um 66 % vom Hauptdurchmesser abweicht. Silica Shells SH sind oberflächenmodifizierte elliptische Silica-Hohlkugeln der Firma Kobo mit einem Durchmesser von 3 $\mu$m (Hauptdurchmesser).

**Tabelle 3: Silikonsystem mit nicht-erfindungsgemäßen Additiven**

| Silikonsystem | Additiv | rub-off | TW 7475 [cN/cm] | TW 7476 [cN/cm] | Ktebkraft-Depression [%] | Beschriftbarkeit | Reibungsverhalten |
|---|---|---|---|---|---|---|---|
| A | kein | 1 | 8 | 14 | -1% | 1 | 2 |
| A | 5,0 Gew.% Silica (MSS-500/3) | 3 | 24 | 10 | 9% | 7 | 7 |
| A | 5,0 Gew.% Silica (MSS-500/3H) | 3 | 71 | 19 | 10% | 6 | 7 |
| A | 5,0 Gew.% Silica (MSS-500/3N) | 1 | 6 | 8 | -1% | 3 | 4 |
| A | 5,0 Gew.% Silica (Silica Shells) | 2 | 17 | 19 | 11 % | 3 | 7 |
| A | 5,0 Gew.% Silica (Silica Shells-SH) | 3 | 12 | 13 | 7% | 3 | 5 |

Der Zusatz von Silica-Partikeln führt zwar in allen Fällen zu einer Verbesserung des Reibungsverhaltens. Zusätzlich ist eine Verbesserung der Beschriftbarkeit der Trennsysteme durch Zusatz von Silica-Partikeln zu erkennen. Allerdings verschlechtert sich das Trennverhalten der mit Silica-Partikeln versetzten Trennsysteme deutlich.

**Beispiel 4**

**Variation Auftragsgewicht**

Silikonsystem A ist wie in Beispiel 1 gewählt. Zu dem Silikonsystem wurden jeweils 2,5% PMMA-Kugeln (Covabead LH 70/3 der Firma Sensient, sphärische PMMA-Kugeln mit einem Partikeldurchmesser (Hauptdurchmesser) von 3 $\mu$m) gegeben und die Formulierungen wurden wie in Beispiel 1 beschrieben verarbeitet und auf Glassine beschichtet und vernetzt.

**Tabelle 4: Einfluss des Auftragsgewichtes auf Trenn- und Reibungseigenschaften**

| Silikonsystem | Additiv | Silikonauf trag [g/m$^2$] | rub-off | TW 7475 [cN/cm] | TW 7476 [cN/cm] | Klebkraft-Depression [%] | Beschriftbarkeit | Reibungsverhalten |
|---|---|---|---|---|---|---|---|---|
| A | 2,5 Gew.% PMMA (Covabead LH 70-3) | 1,17 | 1 | 7 | 20 | 1% | 2 | 9 |
| A | 2,5 Gew.% PMMA (Covabead LH 70-3) | 1,52 | 1 | 5 | 10 | -1% | 2 | 9 |
| A | 2,5 Gew.% PMMA (Covabead LH 70-3) | 2,15 | 2 | 3 | 7 | -1% | 2 | 9 |
| A | 2,5 Gew.% PMMA (Covabead LH 70-3) | 2,62 | 1 | 3 | 5 | 2% | 3 | 3 |

Die in Tabelle 4 dargestellten Daten zeigen, dass mit zunehmendem Auftragsgewicht der Trennschicht das Reibungsverhalten schlechter und die Trenneigenschaften besser werden. Die Trenneigenschaften sind im gesamten untersuchten Bereich in guter bis sehr guter Größenordnung, während das Reibungsverhalten bei jedem Auftragsgewicht deutlich besser ist als der Standard ohne Additive mit 1,5 g/m$^2$ Silikon-Auftragsgewicht.

**Beispiel 5**

**Vergleich verschiedener Additive**

Silikonsystem A ist wie in Beispiel 1 gewählt. Zu dem Silikonsystem wurden jeweils die beschriebenen Additive gegeben und die Formulierungen wurden wie in Beispiel 1 beschrieben verarbeitet und auf Glassine Papier (Silca ind. 2S white SCO 90 g der Firma Ahlström) beschichtet und vernetzt. Anschließend wurde die Verankerung der Trennbeschichtung auf dem Träger nach dem oben beschriebenen rub-off Test untersucht. Als Silikon-Partikel wurde TOSPEARL120 der Firma Momentive verwendet. Die Polyamid Partikel sind sphärische Partikel mit einem mittleren Durchmesser (Hauptdurchmesser) von 5 μm der Firma Arkema Inc.

**Tabelle 5: Vergleich verschiedener Additive**

| Silikonsystem | Additiv | rub-off | TW 7475 [cN/cm] | TW 7476 [cN/cm] | Ktebkraft-Depression [%] | Beschriftbarkeit | Reibungsverhalten |
|---|---|---|---|---|---|---|---|
| A | kein | 1 | 8 | 14 | -1% | 1 | 2 |
| A | 5,0 Gew.% PMMA (Covabead LH 70-3) | 2 | 6 | 10 | 2% | 3 | 8 |
| A | 5,0 Gew.% Polyamid (O rgasol 2001 UD NAT 2) | 2 | 10 | 12 | 4%. | 3 | 5 |
| A | 5,0 Gew. % Silikon (TOSPEARL 120) | 3 | 7 | 12 | 4% | 2 | 6 |
| A | 20 Gew. % CFA100 | 2 | 7 | 13 | 9% | 2 | 2 |
| A | 5,0 Gew. % Silica (MSS-500/3) | 3 | 24 | 10 | 9% | 7 | 7 |
| A | 5,0-Gew. % Silica (MSS-500/3H) | 3 | 71 | 19 | 10% | 6 | 7 |
| A | 5,0 Gew. % Silica (MSS-500/3N) | 1 | 6 | 8 | -1% | 3 | 4 |
| A | 5,0 Gew. % Silica (Silica Shells) | 2 | 17 | 19 | 11% | 3 | 7 |
| A | 5,0 Gew. % Silica (Silica Shells-SH) | 3 | 12 | 13 | 7% | 3 | 5 |

Die in Tabelle 5 dargestellten Daten zeigen, dass die Trennschicht mit PMMA-Partikeln (Covabead LH 70/3 der Firma Sensient, sphärische PMMA-Kugeln mit einem Partikeldurchmesser (Hauptdurchmesser) von 3 $\mu$m) eine gute Verankerung aufweist, sehr gute Trenneigenschaften, eine geringe Klebkraft-Depression und das beste Reibungsverhalten. Kein anderes Additiv vereint über das gesamte Spektrum der relevanten Eigenschaften so gute Werte wie die PMMA Partikel.

**Patentansprüche**

1. Zusammensetzung einer Trennbeschichtung insbesondere zur Ausrüstung eines Releaseliners mit einer Schicht aus der Trennbeschichtung enthaltend:

   • ein Trennmittel und
   • 0,1 Gew.-% bis 5 Gew.-% (bezogen auf die Gesamtzusammensetzung) eines feinteiligen Additivs in Form von Kugeln, **dadurch gekennzeichnet, dass** die Kugeln aus PMMA (Polymethylmethacrylat) oder Mischungen aus PMMA bestehen.

2. Zusammensetzung einer Trennbeschichtung nach Anspruch 1,
   **dadurch gekennzeichnet, dass**
   der Durchmesser der Kugeln 0,01 $\mu$m bis 10 $\mu$m beträgt.

3. Zusammensetzung einer Trennbeschichtung nach zumindest einem der vorangehenden Ansprüche,
   **dadurch gekennzeichnet, dass**
   das Trennmittel gewählt ist aus der Gruppe Silikon, fluoriertes Silikon, fluorierter Kohlenwasserstoff, Silikon-Copolymere, Carbamat, Wachse oder Mischungen aus zwei oder mehr der genannten Stoffe umfasst.

4. Zusammensetzung einer Trennbeschichtung nach zumindest einem der vorangehenden Ansprüche,
   **dadurch gekennzeichnet, dass**
   das Trennmittel lösungsmittelhaltige und/oder lösungsmittelfreie Systeme umfasst.

5. Zusammensetzung einer Trennbeschichtung nach zumindest einem der vorangehenden Ansprüche,
   **dadurch gekennzeichnet, dass**
   das Trennmittel strahlungsvernetzend (UV- oder Elektronenstrahl-), kondensations- oder additionsvernetzend ist.

6. Verwendung einer Trennbeschichtung nach zumindest einem der vorangehenden Ansprüche als zumindest eine Schicht auf einem Releaseliner.

7. Verwendung einer Trennbeschichtung nach zumindest einem der Ansprüche 1 und 3 bis 5 als zumindest eine Schicht auf einem Releaseliner mit einer Schichtdicke von 0,1 bis 5,0 $\mu$m.

8. Verwendung einer Trennbeschichtung nach zumindest einem der Ansprüche 1 bis 5 als zumindest eine Schicht auf einem Releaseliner, mit dem ein ein- oder beidseitig klebendes Klebeband ein- oder beidseitig eingedeckt ist.

**Claims**

1. Composition of a release coating, intended more particularly for furnishing a release liner with a layer of the release coating, comprising:

   • a release agent and
   • 0.1% by weight to 5% by weight (based on the overall composition) of a finely particulate additive in the form of spheres, **characterized in that**
   the spheres consist of PMMA (polymethyl methacrylate) or mixtures of PMMA.

2. Composition of a release coating according to Claim 1,
   **characterized in that**
   the diameter of the spheres is 0.01 $\mu$m to 10 $\mu$m.

**3.** Composition of a release coating according to at least one of the preceding claims,
**characterized in that**
the release agent is selected from the group consisting of silicone, fluorinated silicone, fluorinated hydrocarbon, silicone copolymers, carbamate, waxes or mixtures of two or more of the stated substances.

**4.** Composition of a release coating according to at least one of the preceding claims,
**characterized in that**
the release agent comprises solvent-containing and/or solvent-free systems.

**5.** Composition of a release coating according to at least one of the preceding claims,
**characterized in that**
the release agent is radiation-crosslinking (UV or electron beam), condensation- or addition-crosslinking.

**6.** Use of a release coating according to at least one of the preceding claims as at least one layer on a release liner.

**7.** Use of a release coating according to at least one of Claims 1 and 3 to 5 as at least one layer on a release liner with a layer thickness of 0.1 to 5.0 $\mu$m.

**8.** Use of a release coating according to at least one of Claims 1 to 5 as at least one layer on a release liner with which a single-sided or double-sided adhesive tape is lined on one or both sides.


**Revendications**

**1.** Composition d'un revêtement de séparation, notamment destinée à équiper un revêtement anti-adhérent avec une couche du revêtement de séparation, contenant :

- un agent de séparation et
- 0,1 % en poids à 5 % en poids (par rapport à la composition totale) d'un additif finement divisé sous la forme de billes, **caractérisée en ce que**
les billes sont constituées par du PMMA (polyméthacrylate de méthyle) ou des mélanges de PMMA.

**2.** Composition d'un revêtement de séparation selon la revendication 1, **caractérisée en ce que** le diamètre des billes est de 0,01 $\mu$m à 10 $\mu$m.

**3.** Composition d'un revêtement de séparation selon au moins l'une quelconque des revendications précédentes, **caractérisée en ce que** l'agent de séparation est choisi dans le groupe constitué par une silicone, une silicone fluorée, un hydrocarbure fluoré, un copolymère de silicone, un carbamate, une cire ou des mélanges de deux ou plus des substances mentionnées.

**4.** Composition d'un revêtement de séparation selon au moins l'une quelconque des revendications précédentes, **caractérisée en ce que** l'agent de séparation comprend des systèmes contenant des solvants et/ou sans solvant.

**5.** Composition d'un revêtement de séparation selon au moins l'une quelconque des revendications précédentes, **caractérisée en ce que** l'agent de séparation réticule par rayonnement (rayonnement UV ou faisceau d'électrons), par condensation ou par addition.

**6.** Utilisation d'un revêtement de séparation selon au moins l'une quelconque des revendications précédentes en tant qu'au moins une couche sur un revêtement anti-adhérent.

**7.** Utilisation d'un revêtement de séparation selon au moins l'une quelconque des revendications 1 et 3 à 5 en tant qu'au moins une couche sur un revêtement anti-adhérent d'une épaisseur de couche de 0,1 à 5,0 $\mu$m.

**8.** Utilisation d'un revêtement de séparation selon au moins l'une quelconque des revendications 1 à 5 en tant qu'au moins une couche sur un revêtement anti-adhérent, avec laquelle une bande adhésive simple ou double face est recouverte d'un côté ou des deux côtés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0903385 B1
- US 7198854 B
- US 5620775 A
- US 20050003216 A1
- EP 0523527 A2

- EP 0168713 B1
- DE 3820294 C1
- US 4725630 A1
- DE 3316166 C1